## Europäisches Patentamt

## European Patent Office

## Office européen des brevets

(19)

(11) Numéro de publication: **0 065 885**
**B1**

(12) # FASCICULE DE BREVET EUROPEEN

(45) Date de publication du fascicule du brevet:
**14.03.84**

(51) Int. Cl.³: **H 04 N 3/15**

(21) Numéro de dépôt: **82400461.8**

(22) Date de dépôt: **12.03.82**

(54) **Dispositif pour la production d'images télévisées, à matrice à transfert de charges.**

(30) Priorité: **27.03.81 FR 8106188**

(43) Date de publication de la demande:
**01.12.82 Bulletin 82/48**

(45) Mention de la délivrance du brevet:
**14.03.84 Bulletin 84/11**

(84) Etats contractants désignés:
**DE GB**

(56) Documents cités:
**FR - A - 797 332**
**US - A - 4 038 690**

**IEEE TRANSACTIONS ON ELECTRON DEVICES, vol. ED-20, no. 6, juin 1973, pages 535-540, New York (USA); C.H. SEQUIN: "Interlacing in charge-coupled imaging devices"**

(73) Titulaire: **THOMSON-CSF, 173, Boulevard Haussmann, F-75379 Paris Cedex 08 (FR)**

(72) Inventeur: **Epsztein, Bernard, THOMSON-CSF SCPI 173, bld Haussmann, F-75360 Paris Cedex 08 (FR)**
Inventeur: **Guyot, Lucien, THOMSON-CSF SCPI 173, bld Haussmann, F-75360 Paris Cedex 08 (FR)**

(74) Mandataire: **Mayeux, Michèle et al, THOMSON-CSF SCPI 173, Bld Haussmann, F-75379 Paris Cedex 08 (FR)**

BUNDESDRUCKEREI BERLIN

Dispositif pour la production d'images televisees, a matrice a transfert de charges

La présente invention concerne un dispositif pour la production d'images télévisées, à matrices à transfert de charge.

L'analyse de l'image en télévision s'effectue actuellement par un »balayage ligne entrelacé« de la matrice à savoir qu'une image est subdivisée en deux demi-images obtenues par balayages successifs d'une ligne sur deux de la matrice; pour avoir une bonne résolution de l'image, il faut augmenter le nombre de pixels ou modules élémentaires formés par l'intersection de lignes et de colonnes de la matrice; comme il est difficile sinon impossible de réduire les dimensions du pixel élémentaire, l'augmentation du nombre de pixels entraîne inévitablement une augmentation de la probabilité de présence de défauts dus à une surface nécessaire de semi-conducteur accrue, d'où un rendement de fabrication diminué et un prix de revient très élevé.

La présente invention perment de réduire au moins de moitié le nombre de pixels de la matrice nécessaire à l'obtention d'une résolution d'image donnée.

Pour cela, l'invention prévoit un déplacement relatif de la matrice par rapport à l'image optique d'une distance égale à une ligne image vidéo par exemple, de sorte que la deuxième demiimage vidéo, obtenue dans l'art antérieur par balayage des lignes intercalées entre celles balayées pour l'obtention de la première demi-image, est obtenue par balayage des mêmes lignes que celles balyées pour l'obtention de la première demi-image, lignes ayant subi un déplacement vertical égal à la motié du pas vertical de la matrice; la résolution résultante verticale d'une telle matrice est sensiblement plus élevée que celle d'une matrice classique (jusqu'au double).

L'invention prévoit également d'effectuer un tel déplacement de matrice horizontalement.

Ce qui précède s'applique de façon générale à tous les ensembles visant à la formation d'une image par analyse d'un réseau de points, quelle que soit, à l'origine, la manière dont cette image a été engendrée et le chemin suivi par l'information de ses points dans son transfert vers l'image définitive, donnée par une structure spatialement périodique, ou matrice, d'éléments de lecture. L'invention s'applique au cas de toutes ces images que l'on a englobées sous la dénomination d'images télévisées.

L'un de ces cas est celui mettant en oeuvre des amplificateurs de brillance en rayonnement infra-rouge, visible ou X, qu'on précisera sur des exemples plus loin.

Dans ce cas, l'image est détectée par une photocathode (après transformation en visible dans le cas des rayons X) et transportée par des électrons jusqu'à un écran fluorescent ou une cible de lecture.

Dans le cas où il s'agit d'un écran, l'image lumineuse obtenue est reprise soit par une optique classique, soit par une galette de fibres optiques, qui l'achemine vers un vidicon qui possède lui-même une cible, ou encore vers une matrice photosensible à photodiodes ou transfert de charge.

Le dispositif selon l'invention comprend une matrice photosensiblem à transfert de charges par exemple, composée d'un ensemble de lignes et de colonnes équidistantes, dont l'intersection définit des modules élémentaires, et des moyens associés pour former une image optique sur ladite matrice, dispositif caractérisé en ce qu'il comprend en outre des moyens assurant un déplacement relatif de la matrice par rapport à l'image optique d'une distance égale à la moitié de la dimension d'un module élémentaire, définie dans la direction dudit déplacement.

L'invention sera mieux comprise en se reportant à la description suivante et aux figures jointes qui représentent:

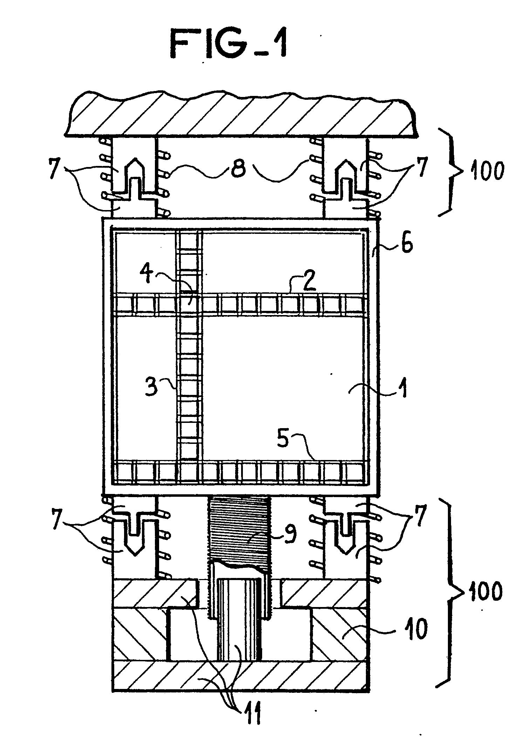

— Figures 1, 2, 3 des variantes d'une partie du dispositif pour la production d'images télévisées, à matrice à transfert de charges, selon l'invention.

L'invention s'applique plus particulièrement au cas de matrices à mémoire de ligne constituées d'une alternance de colonnes photosensibles et de colonnes mémoire, les éléments des premières se déchargeant dans les éléments correspondants des secondes au bout d'une demi-image, les éléments de ces dernières se déchargeant successivement dans la ligne de sortie de la matrice pendant la durée de la demi-image suivante.

L'invention peut s'appliquer également au cas des matrices à mémoire de trame comprenant une moitié supérieure formée d'éléments photosensibles et une moitié inférieure formée d'éléments de mémoire; l'information détectée par les éléments photosensibles est transférée verticalement aux éléments de mémoire puis transférée dans la ligne de sortie de la matrice.

Pour la clarté de la figure 1, on n'a représenté qu'une ligne et une colonne de la matrice; la description qui suit s'applique aussi bien au cas des matrices à mémoire de ligne qu'à celui des matrices à mémoire de trame.

Les moyens permettant de mouvoir la matrice dans son plan dans une direction verticale, la verticale étant définie comme étant celle de l'image, peuvent être des moyens électromécaniques, par exemple un moteur électromagnétique à mouvement linéaire, un système bistable, ou tout autre moyen permettant un déplacement de la matrice tel que celle-ci demeure fixe pendant une demi-image, c'est-à-dire pendant 20 ms (ce qui correspond au standard européen qui est de 25 images par seconde), se déplace verticalement de l'espace d'une ligne, c'est-à-dire de la hauteur d'un demi-pixel pendant le retour image, demeure fixe pendant la demi-image suivante, revient à sa postion initiale pendant le retour image, et recommence le cycle précédent. Ces déplacements doivent être de très faible amplitude, de l'ordre de 10 à 15 μ; les vitesses correspondantes sont de l'ordre de quelques cm/s et les accélérations n'excèdent pas une fraction de g, aussi les puissances nécessaires restent-elles faibles.

Le déplacement prévu par la présente invention peut être celui de l'image optique par rapport à la matrice photosensible; dans ce cas les moyens permettant d'effectuer un tel déplacement peuvent être des moyens optiques actionnés par un dispositif électromécanique du type miroir vibrant, prisme, lame à faces parallèles etc ... ou des moyens purement optiques utilisant des matériaux du type ferroélectrique par exemple interposés sur le trajet optique, matériaux dont les caractéristiques de transmission dépendent directement d'un signal électrique, ou un champ électrique ou magnétique.

Les moyens représentés sur la figure 1 sont des moyens électro-mécaniques, du type moteur électromagnétique, permettant un déplacement de la matrice photosensible par rapport à l'image optique.

L'indice 1 représente sur la figure 1a matrice photosensible dans laquelle on a représenté une ligne 2 et une colonne 3 d'éléments photosensibles, l'intersection d'une ligne et d'une colonne définissant un module élémentaire 4 ou pixel ainsi que la ligne de sortie de la matrice en 5.

La matrice photosensible est entourée d'un support mécanique 6 guidé par les éléments 7 servant également de butées de fin de course en vue de limiter le déplacement total de la matrice à une demi-ligne d'analyse. Le support 6 est soumis à une force de rappel fournie par des ressorts 8, dont la raideur détermine avec la masse mobile, la fréquence de résonnance du système qui doit être suffisamment élevée pour que le déplacement de la matrice s'effectue en moins de 2 μs environ.

Ledit support 6 est également soumis à une force d'exicitation fournie par une bobine mobile 9 plongée dans un champ magnétique radial créé par un électro-aimant 10 et concentré par un circuit magnétique 11; un générateur de signaux carrés, non représenté sur la figure pilote le système. L'ensemble des éléments 7, 8, 9, 10, 11 constitue les moyens électromécaniques 100.

La fréquence de répétition d'un tel système est celle de l'image, à savoir 25 par seconde au standard européen ou 30 par seconde au standard américain; le nombre de points d'échantillonnage le long d'une ligne verticale est ainsi doublé par rapport à l'art antérieur; ce qui a pour effet de réduire considérablement l'effet »d'aliasing« (effet se produisant quand on ne peut plus reconstituer l'image primitive à l'aide des échantillons, quand ceux-ci sont en nombre limité).

La présente invention prévoit également d'effectuer un tel déplacement relatif de la matrice photosensible par rapport à l'image optique, horizontalement.

Cependant, il n'est pas possible d'entrelacer horizontalement les signaux de deux demi-images successives et la définition horizontale reste celle d'origine. Néanmoins, l'oeil humain est capable de tirer un certain profit de l'information supplémentaire ainsi dispensée. Pour réaliser un mouvement horizontal déplaçant la matrice par rapport à l'image d'une demi-cellule horizontale, il suffit d'associer la demi-image ainsi obtenue à des tops de synchronisation ligne décalés dans le temps de la durée de balayage d'une demi-celluluse, pour reconstituer une image plus fixe.

On associe ce mouvement au précédent en sommant les deux vecteurs déplacement.

En pratique, on peut l'obtenir en disposant obliquement le moteur, dans la direction de la diagonale de quatre pixels adjacents.

Dans le cas des amplificateurs de brillance, l'un des éléments présents sur le parcours de l'information possède comme précédemment une structure périodique régulière à 2 dimensions: cible de lecture constituée par un réseau de diodes dans le cas des cibles silicium, réseau de fibres optiques dans le cas de la galette, matrice photosensible ...

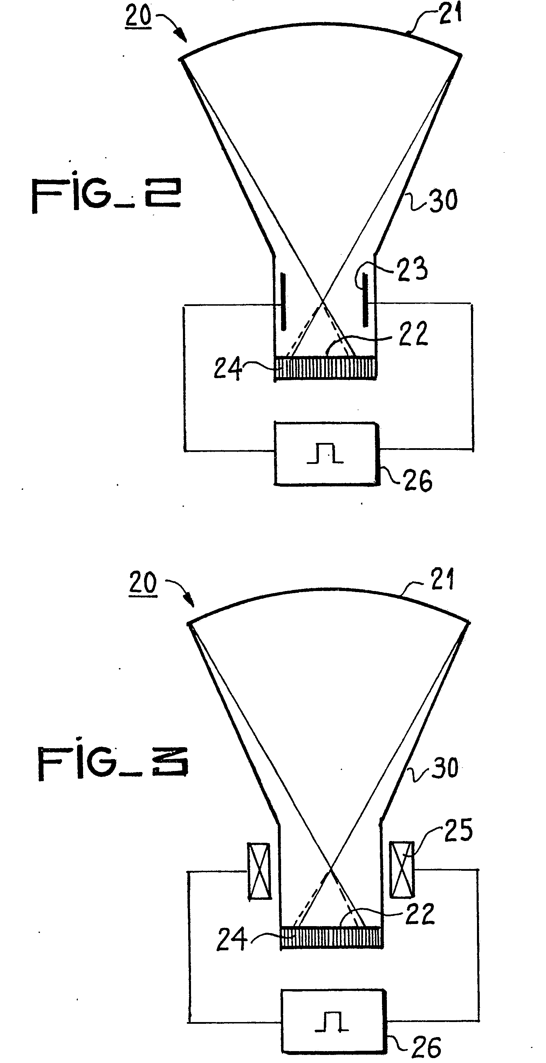

Mais alors que dans l'exemple précédent, le déplacement relatif de l'image et de la structure périodique était réalisé aisément par déplacement de la matrice à l'aide de moyens mécaniques, comme il a été décrit, l'image restant fixe, un tel déplacement devient particulièrement difficile, sinon impossible, lorsque la structure périodique est solidaire d'autres parties du dispositif, comme c'est le car pour la plaquette de fibres optiques liée rigidement à l'amplificateur de brillance contre l'écran de sortie duquel elle est appliquée dans l'enveloppe 30 du tube. Il est beaucoup plus simple alors de déplacer le faisceau d'électrons par rapport à la plaquette. Une telle disposition fait l'objet des figures 2 et 3 qui en montrent deux variantes:

Sur les figures 2 et 3, le repère 20 représente dans son ensemble, un tube convertisseur d'image, amplificateur de brillance, dont la photocathode est en 21 et l'écran cathodo-luminescent de sortie en 22; la photocathode est, comme on sait, éventuellement précédée d'un scintillateur (non représenté) pour la conversion du rayonnement incident; appliquée contre cet écran, une galette de fibres optiques 24 transmet à une autre structure périodique, non représentée, placée devant le tube en bas de la figure, l'image formée sur l'écran 22, réplique de l'image électronique donnée par la photocathode 21 du rayonnement incident arrivant par le haut de la figure.

Dans la variante de la figure 2, c'est un champ électrique, établi aux bornes d'un système de plaques de déviation, 23 qui déplace alternativement, de la quantité voulue, l'impact sur l'écran 22 du faisceau d'électrons incident, délimité sur les figures par les traits obliques, après la fin de chaque demi-image.

Dans la variante de la figure 3, c'est un champ magnétique, créé par les bobines 25, qui assure ce déplacement, de la position en traits pleins à celle en traits interrompus.

Dans les deux cas, les éléments de déviation 23 et 25 sont alimentés en impulsions carrées par le générateur 26. La faiblesse de l'amplitude de la déviation nécessaire, de la moitié d'un module élémentaire, soit quelques microns, fait qu'aucune aberration importante n'accompagne normalement ce mouvement du faisceau.

La présente invention s'applique à tout dispositif pour la production d'images télévisées nécessitant une grande résolution.

## Revendications

1. Dispositif pour la production d'images télévisées comprenant une structure spatialement périodique, ou matrice photosensible (1), à transfert de charges par exemple, composée d'un ensemble de lignes (2) et de colonnes (3) équidisantes dont l'intersection définit des modules élémentaires (4), et des moyens associés pour former une image optique sur ladite matrice, laquelle matrice élabore des signaux correspondant aux points de l'image suivant le mode dit à »balayage ligne entrelacé«, c'est-à-dire pour tous les points d'une première moitié de l'image faite de lignes de cette image espacées de deux en deux, puis pour tous les points de la seconde moitié, faite des lignes alternées avec les précédentes, caractérisé en ce qu'il comprend, en outre, des moyens (100; 23; 25) assurant le déplacement relatif de la dite image par rapport à la matrice d'une distance égale à la moitié de la dimension d'un module élémentaire, après l'élaboration dans une position initiale de chaque demi-image, son maintien dans cette seconde position pendant toute la durée de l'élaboration de la demi-image suivante, et un retour à la position initiale, après l'élaboration de cette dernière demi-image.

2. Dispositif selon la revendication 1, caractérisé en ce que ledit déplacement est un déplacement de la matrice photosensible (1) par rapport à l'image optique, dans une direction parallèle à celle des colonnas (3).

3. Dispositif selon la revendication 1, caractérisé en ce que ledit déplacement est un déplacement de la matrice photosensible (1) par rapport à l'image optique, s'effectuant dans une direction perpendiculaire à celle des colonnes.

4. Dispositif suivant la revendication 1, caractérisé en ce que ledit déplacement est un déplacement de la matrice (1) par rapport à l'image optique, et en ce que ces moyens (100) consistent en une bobine mobile (9) en butée sur un cadre solidaire de la matrice plongée dans le champ magnétique d'un électro-aimant (10), et des moyens d'alimentation du dit électro-aimant en signaux carrés.

5. Dispositif suivant la revendication 1, caractérisé en ce que l'image optique étant la réplique de l'image électronique fournie par un faisceau d'électrons formant impact sur l'écran cathodoluminescent (22) d'un tube convertisseur (20), ledit déplacement est un déplacement de l'image par rapport à la matrice, et en ce que ces moyens assurant le deplacement consistent en des moyens (23; 25) assurant le déplacement des électrons du faisceau par rapport à l'écran (22) comprenant un système capable d'établir un champ électrique (ou magnétique) sur le parcours du faisceau au voisinage de son impact sur l'écran (22), lorsque des signaux lui sont appliqués, et des moyens (26) d'alimentation appliquant à ce système des signaux carrés.

## Patentansprüche

1. Vorrichtung zur Erzeugung von Fernsehbildern mit einer lichtempfindlichen räumlich periodischen Struktur oder Matrix (1), z. B. mit Ladungstransfer, bestehend aus einer Anzahl äquidisanter Zeilen (2) und spalten (3), deren Schnittpunkte Elementarmoduln (4) definieren, und aus zugeordneten Mitteln, um einen optisches Bild auf der Matrix zu erzeugen, wobei die Matrix entsprechend den Bildpunkten nach dem Zeilensprungverfahren Signale erzeugt, d. h. zuerst für alle Punkte einer ersten Bildhälfte, die sich aus allen geradzahligen Zeilen zusammensetzt, und dann für alle Punkte einer zweiten Bildhälfte, die sich aus den übrigen Zeilen zusammensetzt, dadurch gekennzeichnet, daß außerdem Mittel (100; 23; 25) vorgesehen sind, die die Verschiebung des Bildes bezüglich der Matrix um eine Strecke bewirken, die gleich der Hälfte der Elementarmodul-Abmessung ist, und zwar nach der Abtastung jedes Halbbildes in einer Anfangsstellung, worauf während der ganzen Dauer der Abtastung des nächsten Halbbildes diese zweite Stellung beibehalten wird und erst nach der Abtastung dieses letzteren Halbbildes eine Rückkehr zur Anfangsstellung erfolgt.

2. Vorrichtung nach Anspruch 1, dadurch gekennzeichnet, daß die Verschiebung der lichtempfindlichen Matrix (1) bezüglich des optischen Bildes in einer Richtung erreicht wird, die parallel zur Spaltenrichtung (3) verläuft.

3. Vorrichtung nach Anspruch 1, dadurch gekennzeichnet, daß die Verschiebung der lichtempfindlichen Matrix (1) bezüglich des optischen Bildes in einer Richtung erreicht wird, die senkrecht zur Spaltenrichtung verläuft.

4. Vorrichtung nach Anspruch 1, dadurch gekennzeichnet, daß die Verschiebung durch Verschiebung der Matrix (1) bezüglich des optischen Bildes erreicht wird und daß die Mittel (100) aus einer beweglichen Spule (9), die an einem mit der Matrix fest verbundenen Rahmen anliegt und in das Magnetfeld eines Elektromagneten (10) eintaucht, und aus Mitteln zur Versorgung des Elektromagneten mit Rechtecksignalen bestehen.

5. Vorrichtung nach Anspruch 1, dadurch gekennzeichnet, die die Verschiebung des Bildes bezüglich der Matrix erreicht wird, sofern das optische Bild eine Replik des von einem auf einen kathodolumineszenten Schirm (22) einer Wandlerröhre (20) auftretenden Elektronenstrahl gelieferten elektronischen Bildes ist, und daß die Mittel, die die Verschiebung bewirken, aus Mitteln (23, 25), die die Verschiebung der Elektronen im Strahl bezüglich des Schirms (22) bewirken und ein System aufweisen, das in der Lage ist, ein elektrisches (oder magnetisches) Feld auf dem Weg des Strahls in der Nähe seines Auftreffens auf den Schirm (22) herzustellen, wenn an das System Signale angelegt werden, und aus Mitteln (26) bestehen, mit denen an das System Rechtecksignale angelegt werden.

## Claims

1. A device for producing televised pictures comprising a photosensitive spatially periodic structure or matrix (1), e. g. a charge transfer matrix, constituted by a system of equidisant lines (2) and columns (3), whose intersection defines elementary modules (4), and associated means for forming an optical image on the said matrix, which processes the signals corresponding to the points of the image in accordance with the so-called »interlaced line scanning mode«, i. e. for all the points of a first half of the image formed from lines of said spaced in pairs, then for all the points of the second half formed by lines alternating with the first, characterized in that it further comprises means (100; 23; 25) ensuring the relative displacement of the said said image with respect to the matrix by a distance equal to half the size of an elementary module, after the processing of each half-image in an initial position, its maintaining in said second position throughout the processing time of the following half-image and a return to the initial position after processing of said following half-image.

2. A device according to claim 1, characterized in that the displacement is a displacement of the photosensitive matrix (1) relative to the optical image in a direction parallel to the columns (3).

3. A device according to claim 1, characterized in that the displacement is a displacement of the photosensitive matric (1) relative to the optical image, which takes place in a direction perpendicular to that of the columns.

4. A device according to claim 1, characterized in that the displacement is a displacement of the matrix (1) relative to the optical image, and that the means (100) consist of a moving coil (9) which abuts against a frame integral with the matrix and which is immersed in the magnetic field of an electromagnet (10), and of means for supplying the electromagnet with square signals.

5. A device according to claim 1, characterized in that, if the optical image is the replica of the electronic image supplied by an electron beam forming an impact on the cathodoluminescent screen (22) of a converter tube (20), said displacement is a displacement of the image relative to the matrix, and that the said means ensuring the displacement comprise means (23, 25) ensuring the displacement of the electrons of the beam with respect to the screen (22) and include a system able to produce an electric (or magnetic) field on the path of the beam in the civinity of its impact with the screen (22), when signals are applied thereto, and supply means (26) applying square signals to said system.

# FIG _ 1

FIG_2

FIG_3